# EUROPÄISCHE PATENTSCHRIFT

(11) **EP 1 318 380 B1**
(45) Veröffentlichungstag und Bekanntmachung des Hinweises auf die Patenterteilung: **26.04.2006**
(21) Anmeldenummer: 02019698.6
(22) Anmeldetag: 04.09.2002
(51) Int. Cl.: G01C 21/20, G01C 21/36

(54) **Kraftfahrzeug mit automatischer Positionsanzeige bei Notfällen**
Vehicle with automatic location display in case of emergency
Véhicule avec indication automatique de la position en cas d'urgence

(30) Priorität: 07.12.2001 DE 10160292
(43) Veröffentlichungstag der Anmeldung: 11.06.2003
(73) Patentinhaber: AUDI AG, 85045 Ingolstadt (DE)
(72) Erfinder: Schilgen, Olaf Ludgar, 85057 Ingolstadt (DE)
(74) Vertreter: Thielmann, Frank

(56) Entgegenhaltungen:
- DE-A- 19 516 649
- DE-A- 19 644 445
- US-B1- 6 208 932
- US-B1- 6 324 393

## Beschreibung

Die Erfindung bezieht sich auf ein Kraftfahrzeug mit Navigationssystem oder einer Ausrüstung mit einer Positionserkennung ohne Navigation, beispielsweise durch Ausrüstung mit einer GPS (Global Positioning System)-Antenne und automatischer Positionsanzeige bei Notfällen.

Zur Verbesserung der Sicherheit von Kraftfahrzeugen bei Notfällen sind bereits eine Reihe von Melde- und Erkennungssystemen vorgeschlagen worden, die bei einem Unfall oder Notfall mehr oder weniger automatisch eingeschaltet werden.

So ist in der DE 197 30 792 A1 bereits vorgeschlagen worden, die Kraftfahrzeuge mit Empfangseinrichtungen für kommunizierten Datenaustausch zu versehen, um Informationen von Gefahrensensoren sowohl mit nachfolgenden Fahrzeugen auszutauschen, wobei insbesondere vorgesehen ist, dass Signale eines Crash-Sensors zum automatischen Einschalten der Warnblinkanlage herangezogen werden, wobei bei vorhandenem Navigationsgerät von diesem die Daten automatisch an eine Pannenzentrale gesendet werden sollen. Diese Anordnung ist aber außerordentlich aufwändig und teuer. Dies gilt auch für eine in der DE 38 39 959 C2 vorgeschlagenen Notrufeinrichtung für Kraftfahrzeuge, bei denen ein Notfunkgerät mit automatischen Notrufnummern über eine Taste auslösbar ist, um die Daten eines Navigationsgeräts an eine Zentrale zu übersenden. Es bedarf eines aufwändigen und in der Praxis ja fast nie gebrauchten Notfunkgerätes, dessen Einbau aus Kostengründen häufig abgelehnt wird.

Der Erfindung liegt daher die Aufgabe zugrunde, verbesserte Notfallmeldung bei Unfällen durch eine automatische Positionsanzeige zu schaffen, die dem Fahrer bei einem Notfall, einer Panne oder einem Unfall eine vereinfachte Feststellung und darauf folgend eine vereinfachte Weitergabe seiner Position etwa per Notfallsäule an der Fahrbahn oder auch per Mobiltelefon oder anderer persönlicher Kommunikationseinrichtungen ermöglicht, ohne dass er weitere Zusatzeinbauten am Auto benötigt.

Normale Navigationsgeräte verfügen bereits fast immer auch über eine spezielle Funktion zur Anzeige der momentanen Position in Form von Koordinaten, aber diese Funktion ist dem Normalnutzer zumeist entweder nicht bekannt, oder der Weg zum Abruf dieser Anzeige ist ihm nicht geläufig. Vor allem im Notfall erscheint es deshalb günstig, ihm eine Hilfestellung zu geben, die die Anzeige dieser im System vorhandenen Positionsangabe automatisiert.

Aus der DE 195 16 649 A1 ist bereits eine Navigationseinrichtung für Kraftfahrzeuge bekannt geworden, bei der ausgelöst durch eine Handlung des Fahrzeugbenutzers, die eine außergewöhnliche und hilfsbedürftige Situation erkennen lässt, beispielsweise das manuelle Einschalten der Warnblinkanlage, selbsttätig in das Display der Navigationsvorrichtung Zusatzinformationen eingeblendet werden, abhängig vom Fahrzeugstandort oder vom Fahrzeugstatus. Derartige Zusatzinformationen erfordern aber ein korrekt eingeschaltetes Navigationssystem, was in vielen Fällen nicht der Fall ist, da in den meisten Fällen die Autofahrer - selbst wenn sie ihr Navigationssystem bedienen können - dieses deshalb nicht einschalten, weil sie auf Strecken unterwegs sind, die sie so gut kennen, dass sie natürlich kein Navigationssystem brauchen.

Zur Lösung dieser Aufgabe ist erfindungsgemäß vorgesehen, dass die Positionsangabe des Navigations- oder Positionsanzeigesystems gekoppelt mit dem Einschalten der Warnblinkanlage zur Anzeige in der Bedienerschnittstelle gebracht wird, wobei das Navigationsgerät im ausgeschalteten Zustand sich nach dem Einschalten der Warnblinker automatisch mit einschaltet.

Wesentlich für die Erfindung ist dabei, dass das Navigationsgerät im ausgeschalteten Zustand sich nach Einschalten der Warnblinker automatisch mit einschaltet, wobei bei heute üblichen Geräten ein Ausschalten meist nur eine Ausschalten der Anzeige meint, ein wirkliches Stromlos-setzen von Geräten erfolgt faktisch nie.

Der Fahrer eines Kraftfahrzeugs ist es gewohnt, bei Unfällen oder Staus die Warnblinktaste zu drücken, er denkt aber in der Aufregung solcher Situationen meist nicht daran, das Navigationsgerät einzuschalten. Wenn dies nun automatisch geschieht, so ist dies ein Hinweis an den Fahrer, er könne doch, bei einem heute nahezu stets über ein Handy möglichen Anruf bei der Polizei oder der Autobahnmeisterei, auch gleich die genaue Position des Fahrzeugs auf dem Navigationsgerät ablesen. Diese automatische Erinnerungsfunktion durch das selbsttätige Einschalten des Navigationsgerätes mit der Warnblinktaste ergibt eine deutliche Verbesserung bei der Meldung oder Weitergabe von Unfällen, ohne dass hierfür große Einbauten wie bei den bekannten Notrufanlagen erforderlich sind.

Beim heutigen Stand der Fahrzeugvernetzung sieht die erfindungsgemäße Ausgestaltung so aus, das über die vorhandene CAN-Vernetzung die Software zur Steuerung des Navigationssystems die Information auf dem CAN-Bus über das eingeschaltete Warnblinklicht ausliest und auswertet, und darauf in der Form antwortet, dass ohne eine bedienergeführte Aktion die Positionsanzeige auf dem Bedieninterface (was sowohl ein Flüssigkristallpixeldisplay im Kombünstrument, als auch ein Farbbildschirm oder eine andere, alternative Benutzerschnittstelle wie eine eventuelle Sprachausgabe sein kann) erscheint. Eine weitere konventionelle Bedienung dieses Gerätes ist damit weder ausgeschlossen noch blockiert, der Benutzer kann jederzeit weiter über die vorgesehene Benutzerschnittstelle das Navigationssystem oder Positionsanzeigesystem in allen seinen Funktionen weiter bedienen oder auch wieder ausschalten.

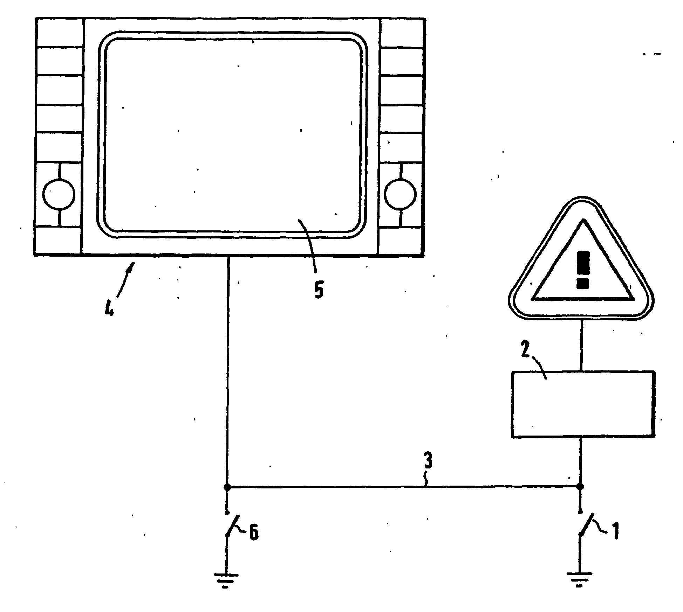

Weitere Vorteile, Merkmale und Einzelheiten der Erfindung ergeben sich aus der nachfolgenden Beschreibung eines Ausführungsbeispiels sowie anhand der Zeichnung, die schematisch die Verkettung von Navigationssystem und Warnblinklichttaste zeigt.

Die Warnblinktaste, 1 mit der die Warnblinksteuerung 2 eingeschaltet wird, ist automatisch über den CAN-Bus 3 mit dem Navigationssystem 4 verbunden, das, wie im Bild gezeigt, auf der Mittelkonsole angeordnet sein kann oder aber auch als Kombünstrument in das Armaturenbrett integriert sein kann. Mit dem Betätigen der Warnblinktaste 1 erfolgt automatisch ein Einschalten des Navigationsgeräts, sodass der Fahrer zu einen daran erinnert wird, dass man - zweckmäßigerweise über ein Handy oder auch die Notrufsäule an der Autobahn - einen Notruf absetzen kann. Gleichzeitig steht im für einen solchen Notruf auch die auf dem Bildschirm 5 des Navigationssystems 4 angezeigte Position mit Längengrad, Breitengrad plus gegebenenfalls einer Kartendarstellung der örtlichen Umgebung zur Verfügung, sodass er diese Daten auch dann zuverlässig an die Polizei oder eine sonstige Zentrale weitermelden kann, wenn er sich am Unfallort überhaupt nicht auskennt.

## Patentansprüche

1. Kraftfahrzeug mit Navigationssystem (4) oder einer automatischen Positionserkennung ohne Navigation und Positionsanzeige (5) bei Notfällen,
**dadurch gekennzeichnet,**
**dass** die Positionsangabe des Navigations- oder Positionsanzeigesystems gekoppelt mit dem Einschalten der Warnblinkanlage (2) zur Anzeige in der Bedienerschnittstelle gebracht wird, wobei das Navigationsgerät im ausgeschalteten Zustand sich nach dem Einschalten der Warnblinker automatisch mit einschaltet.

## Claims

1. Motor vehicle with a navigation system (4) or with automatic position detection without navigation and position display (5) in case of emergency,
**characterized in that**
upon actuation of the hazard warning lights (2) the position report of the navigation or position display system is put on display in the operator interface, the navigation unit (if switched off) having been switched on automatically upon actuation of the hazard warning lights.

## Revendications

1. Véhicule avec un système de navigation (4) ou de reconnaissance de position sans navigation et d'indication de position (5) en cas d'urgence,
**caractérisé en ce que** la donnée de position du système de navigation ou d'indication de position est amenée couplée avec le déclenchement des feux de détresse (2) pour indication à l'interface du serveur, l'outil de navigation se trouvant à l'état hors tension se déclenchant automatiquement après le déclenchement des feux de détresse.
